# EUROPÄISCHE PATENTANMELDUNG

(11) **EP 2 172 636 A2**
(43) Veröffentlichungstag der Anmeldung: **07.04.2010**
(21) Anmeldenummer: 09012238.3
(22) Anmeldetag: 26.09.2009
(51) Int. Cl.: F02K 9/52

(54) **Einspritzelement für eine Raketenbrennkammer und Einspritzsystem**

(30) Priorität: 01.10.2008 DE 102008049842
(71) Anmelder: Astrium GmbH, 82024 Taufkirchen (DE)
(72) Erfinder: Mäding, Chris Udo, Dr., 85716 Unterschleissheim (DE)
(74) Vertreter: Hummel, Adam

(57) **Zusammenfassung**

Die Erfindung betrifft ein Einspritzelement und Einspritzsystem für eine Raketenbrennkammer, das einen zumindest weitgehend rotationssymmetrisch ausgebildeten Zentralkörper (8) mit zumindest einem Elementraum (5,20) zur Einbringung einer jeweiligen Treibstoffkomponente in die Raketenbrennkammer aufweist. Der zumindest eine Elementraum (5,20) ist über ein jeweiliges Ventil mit einer Treibstoffzufuhr verbunden. Das Ventil ist durch ein koaxial zu dem Zentralkörper (8) angeordnetes Verschlusselement (23) gebildet, das gegenüber Einlassöffnungen (7,27) des zumindest einen Elementraums (5,20) axial und/oder rotatorisch bezüglich der Rotationsachse des Einspritzelements (1) zwischen einer Verschlussstellung und einer Öffnungsstellung bewegbar ist, oder umgekehrt.

## Beschreibung

Die Erfindung betrifft ein Einspritzelement für eine Raketenbrennkammer, das einen zumindest weitgehend rotationssymmetrisch ausgebildeten Zentralkörper mit zumindest einem Elementraum zur Einbringung einer jeweiligen Treibstoffkomponente in die Raketenbrennkammer aufweist, wobei der zumindest eine Elementraum über ein jeweiliges Ventil mit einer Treibstoffzufuhr verbunden ist.

Einspritzelemente dienen der Einbringung und Gemischaufbereitung von Treibstoffen in die Raketenbrennkammer. Dabei existieren unterschiedliche Arten von Einspritzelementen. In Raketentriebwerken werden entweder Einstoff- oder Zweistoffeinspritzelemente eingesetzt. Bei letzteren, die der Zuführung zweier Treibstoffkomponenten zur Reaktion in der Raketenbrennkammer dienen, wird in der Regel auf eine koaxiale Bauweise zurückgegriffen. Der Aufbau und die Funktionsweise unterschiedlicher Arten von Einspritzelementen ist aus dem Stand der Technik bekannt.

Um den Fluss einer Treibstoffkomponente in Abhängigkeit des Druckes einer Treibstoffkomponente steuern zu können, schlägt die US 5,265,415 ein Einspritzelement mit einem Reed-Ventil vor, das Abhängig vom Druckverlust die Öffnung bzw. den Öffnungsquerschnitt eines Auslasses variiert. Das Reed-Ventil stellt dabei einen festgelegten minimalen Strömungsbereich bereit, lässt sich somit nicht vollständig schließen.

Die DE 43 05 154 C1 offenbart ein Einspritzelement in Koaxialbauweise für den Betrieb mit zwei hypergol reagierenden Treibstoffen, welches keinen Vorreaktionsraum für die Treibstoffe benötigt. Der Brennstoffstrom wird mittels eines Strömungsteilers in gleiche Einflussströme aufgespalten, wobei einzelne Brennstoffstrahlen in der Raketenbrennkammer auf einen Oxidatorspritzkegel treffen und diesen teilweise durchdringen. Hierdurch ergibt sich eine erwünschte gute Durchmischung der beiden Treibstoffkomponenten.

Die DE 44 38 495 A1 schlägt ein Einspritzelement vor, welches einen zentralen Einspritzkanal aufweist, dem eine erste Treibstoffkomponente zugeführt wird. Darüber hinaus ist ein den zentralen Kanal umgebender ringförmiger Einspritzspalt vorgesehen, dem eine zweite Treibstoffkomponente zugeführt wird. Ein zusätzlicher ringförmiger Einspritzkanal für die zweite Treibstoffkomponente wird durch einen im Bereich der einzelnen Einspritzelemente zwischen deren seitlicher Wandung und der Einspritzwand ausgebildeten Raum gebildet, so dass der aus dem Ringspalt austretende Schleier der ersten Treibstoffkomponente zwischen dem mittleren Strahl und dem äußeren Treibstoffschleier angeordnet ist, die jeweils aus der zweiten Treibstoffkomponente bestehen.

Bei dem in der US 3,408,816 beschriebenen Einspritzelement ist ein in seiner Größe variabler Brennstoffauslass vorgesehen. Die Veränderung der Größe bzw. Fläche des Auslasses wird automatisch vorgenommen, um sich an Änderungen in Dichte, Geschwindigkeit und Druck des Brennstoffs anzupassen.

Besonders im Bereich von Kleinantrieben in einem Schubbereich bis ca. 10 kN ergibt sich aufgrund der zum Teil sehr kurzen Betriebszeiten (sog. aktiven Betriebsphasen) die Notwendigkeit einer schnellen Zu- und Abschaltung der Raketenbrennkammer, um erforderliche Flugmanöver durchführen zu können. Diese Kurzzeitbetriebsphasen werden als Pulsmodebetrieb bezeichnet. Die Reaktionsgeschwindigkeit der Systeme, welche die Zeiträume vom Beginn einer Ventilschaltung zur Zuführung der Treibstoffkomponente(n) zu einem jeweiligen Einspritzelement bis zum Erreichen des Schubaufbaus von 90 % sowie die Phase bis zum völligen Schubabbau charakterisiert, ist im Wesentlichen von dem sog. Trippelvolumen abhängig. Das Trippelvolumen charakterisiert denjenigen Volumenbereich vom Ventilaustritt bis zum Einspritzelement, welcher gefüllt werden muss, bevor die Treibstoffkomponente(n) über das Einspritzelement in die Raketenbrennkammer eingebracht werden können und der normale Druckaufbau in der Raketenbrennkammer aufgrund der einsetzenden Reaktion beginnt.

Herkömmliche Einspritzelemente, wie z.B. Doppeldrallelemente weisen ein zum Teil erhebliches Trippelvolumen auf, wodurch die Verwendung für einen Kurzzeitbetrieb der oben beschriebenen Art stark beschränkt ist. Dies gilt insbesondere bei hohen zu erzielenden Treibstoffdurchsätzen und Schüben. Um dieser Problematik zu begegnen, werden sog. Pintle-Elemente in den Einspritzelementen eingesetzt. Diese sind beispielsweise in der US 6,591,603 und der US 4,206,594 beschrieben.

Es ist daher Aufgabe der vorliegenden Erfindung, ein Einspritzelement für eine Raketenbrennkammer sowie ein Einspritzsystem mit wenigstens einem Einspritzelement anzugeben, bei welchen das Trippelvolumen völlig eliminiert ist.

Diese Aufgabe wird durch ein Einspritzelement gemäß den Merkmalen des Patentanspruches 1 bzw. ein Einspritzsystem mit den Merkmalen des Patentanspruches 15 gelöst. Vorteilhafte Ausgestaltungen ergeben sich aus den abhängigen Ansprüchen.

Die Erfindung schafft ein Einspritzelement für eine Raketenbrennkammer, das einen zumindest weitgehend rotationssymmetrisch ausgebildeten Zentralkörper mit zumindest einem Elementraum zur Einbringung einer jeweiligen Treibstoffkomponente in die Raketenbrennkammer aufweist, wobei der zumindest eine Elementraum über ein jeweiliges Ventil mit einer Treibstoffzufuhr verbunden ist. Erfindungsgemäß ist das Ventil durch ein koaxial zu dem Zentralkörper angeordnetes Verschlusselement gebildet, das gegenüber Einlassöffnungen des zumindest einen Elementraums axial und/oder rotatorisch bezüglich der Rotationsachse des Einspritzelements zwischen einer Verschlussstellung und einer Öffnungsstellung bewegbar ist, oder umgekehrt.

Die Erfindung schlägt somit ein Einspritzelement vor, bei dem die Funktion des Ventils in das Einspritzelement selbst integriert ist. Auf diese Weise kann das Trippelvolumen mit den für den Kurzzeitbetrieb beschriebenen Nachteilen vollständig eliminiert werden, so dass eine sehr schnelle Zu- und Abschaltung der Raketenbrennkammer ermöglicht ist. Hierdurch wird die verlängerte Reaktionszeit des Einspritzelements bzw. der Raketenbrennkammer, welche durch die Füllung des Trippelvolumens verursacht ist, vermieden. Das erfindungsgemäße Einspritzelement kann dabei als herkömmliches Koaxialeinspritzelement oder als Doppeldralleinspritzelement ausgebildet sein.

In einer konkreten Ausgestaltung ist das Verschlusselement auf einer Außenseite des Zentralkörpers angeordnet. Hierdurch lässt sich die Ventilfunktion auf besonders einfache Weise realisieren und betreiben. Ein weiterer Vorteil besteht darin, dass das erfindungsgemäße Einspritzelement besonders kompakt aufgebaut ist.

In einer weiteren Ausgestaltung ist das Verschlusselement fest an einem Zwischenboden der Raketenbrennkammer befestigt, wobei der Zentralkörper relativ zu dem Verschlusselement in einer Aufnahme des Zwischenbodens drehbar gelagert ist. In dieser konkreten Ausgestaltung erfolgt eine Aktivierung oder Deaktivierung der Einspritzung einer Treibstoffkomponente in den zumindest einen Elementraum durch die Drehbewegung des Zentralkörpers relativ zu denjenigen Teilen, welche einen Verschluss der Einlassöffnungen bewirken. Diese Ausgestaltung ist besonders einfach realisierbar, da der Zentralkörper rotationssymmetrisch ausgebildet ist und damit zur Steuerung des Ventils lediglich ein Aktuator benötigt wird, der die Drehung des Zentralkörpers um ein definiertes Maß bewirkt.

Insbesondere wird der Drehwinkel des Zentralkörpers relativ zum Verschlusselement zur Aktivierung der Einspritzung in Abhängigkeit des wirksamen Strömungsquerschnitts der Einlassöffnungen, insbesondere der Gestalt und/oder der Anzahl von Öffnungen, gewählt. Durch den Aktuator des Zentralkörpers kann damit die Menge an Treibstoff festgelegt werden, die in den zumindest einen Elementraum eingespritzt wird.

Zur Herbeiführung der Drehbewegung des Zentralkörpers relativ zu dem Verschlusselement ist daher vorgesehen, ein mechanisches oder pneumatisches Antriebsmittel an dem Einspritzelement vorzusehen.

Gemäß einer weiteren Ausgestaltung weist das Verschlusselement eine der Anzahl der Öffnungen (der Einlassöffnung) entsprechende Anzahl an Verschlusskappen auf, wobei in der Verschlussstellung die Verschlusskappen die Öffnungen verschließen und in der Öffnungsstellung die Öffnungen freigeben. Insbesondere ist hierbei vorgesehen, dass die Verschlusskappen mit einem Dichtungsmittel versehen sind. Hierdurch können Leckagen im abgeschalteten Brennkammerzustand im Bereich des Einspritzelements vermieden werden. Jeder der Anzahl an Öffnungen der Einlassöffnung ist eine entsprechende Verschlusskappe zugeordnet, welche je nach Verdrehwinkel des zentralen Körpers gegenüber dem Verschlusselement bzw. der betreffenden Verschlusskappe die jeweilige Einlassöffnung verschließt oder teilweise oder vollständig freigibt.

In einer alternativen Ausgestaltung erfolgt die axiale Verschiebung des Zentralkörpers relativ zu dem Verschlusselement zur Freigabe der Öffnungen der Einlassöffnung oder zum Verschließen der Öffnungen durch Druckbeaufschlagung mit Gas oder einem Federmechanismus. Ebenso kann ein mechanisches Antriebsmittel zur Herbeiführung der axialen Bewegung vorgesehen sein. Diese Ausgestaltungsvariante ermöglicht ebenfalls kompakt aufgebaute Einspritzelemente, wobei durch den Aktuator die in den zumindest einen Elementraum eingebrachte Menge an Treibstoff definiert gesteuert werden kann.

Das Verschlusselement umfasst gemäß dieser Ausgestaltung ein erstes Teil, welches topfförmig ausgebildet ist und über den von der Raketenbrennkammer abgewandten Zentralkörper gestülpt ist zum Öffnen oder Schließen von Öffnungen des zumindest einen Elementraums.

Ferner ist an dem Zentralkörper ein umlaufender Flansch vorgesehen, der von einem im Querschnitt U-förmigen Abschnitt eines zweiten Teils des Verschlusselements in radialer und in axialer Richtung umschlossen ist, wobei der umlaufende Flansch an den Boden des U-förmigen Abschnitts grenzt und diesen in zwei hermetisch voneinander getrennte Kammern trennt, wobei durch Steuerung der Volumina der Kammern die Stellung des Zentralkörpers relativ zu dem Verschlusselement steuerbar ist. Der umlaufende Flansch dient somit zur Abdichtung der zwei Kammern voneinander. Durch die Ausgestaltung des zweiten Teils wird die Bewegung des Zentralkörpers relativ zu dem Verschlusselement bewirkt und gleichzeitig eine Dichtfunktion gegenüber einer oder mehreren Treibstoffkomponenten vorgenommen.

Der Zentralkörper weist zweckmäßigerweise eine obere und eine untere, jeweils umlaufende Begrenzungsvorrichtung auf, an welcher ein jeweiliger zu dem Zentralkörper koaxialer Wandabschnitt des Verschlusselements in seiner Öffnungs- bzw. Verschlussstellung grenzt, wobei die jeweiligen Wandabschnitte sich integral flanschartig von dem U-förmigen Abschnitt des Verschlusselements weg erstrecken. Durch die Wandabschnitte wird die axiale Bewegung des Zentralkörpers relativ zu dem zweiten Teil und damit dem Verschlusselement begrenzt bzw. festgelegt.

Um die Bewegung des Zentralkörpers relativ zu dem Verschlusselement einfach gestalten zu können, ist ferner vorgesehen, dass das erste und das zweite Teil mechanisch miteinander gekoppelt sind.

Wie eingangs bereits erläutert, kann das Einspritzelement in Koaxialbauweise ausgebildet sein, bei dem ein erster Elementraum für eine erste Treibstoffkomponente in einen sich verengenden ersten Strömungskanal mit einer ersten Auslassöffnung mündet und ein zweiter Elementraum koaxial zu dem ersten Strömungskanal angeordnet ist und eine zweite, zu der ersten Auslassöffnung koaxiale Auslassöffnung aufweist. Wenn in der vorliegenden Beschreibung von einer Auslassöffnung die Rede ist, so kann diese eine oder mehrere Öffnungen mit beliebigem Querschnitt (z.B. Bohrungen) zur Aufteilung eines jeweiligen Brennstoffstrahls umfassen. Ferner können die Öffnung oder die Öffnungen in ihrer geometrischen Form und/oder Strahlachse variieren, so dass beispielsweise eine Mehrzahl an Strahlen parallel oder nicht parallel zueinander in die Brennstoffkammer führen.

In einer weiteren konkreten Ausgestaltung sind die Einlassöffnungen des ersten Elementraums und/oder des zweiten Elementraums als radiale oder tangentiale Bohrungen ausgebildet.

Ein erfindungsgemäßes Einspritzsystem für eine Raketenbrennkammer weist zumindest ein Einspritzelement der oben beschriebenen Art auf.

Die Erfindung wird nachfolgend näher anhand von Ausführungsbeispielen in den Figuren beschrieben. Es zeigen:
- Fig. 1: den prinzipiellen Aufbau einer ersten Ausführungsform eines erfindungsgemäßen Einspritzelementes in einer perspektivischen und Schnittdarstellung,
- Fig. 2: die Ausgestaltung der Ventilfunktion des Einspritzelementes in Fig. 1 in einer perspektivischen Darstellung,
- Fig. 3: eine perspektivische Darstellung des Einspritzelementes gemäß Fig. 1,
- Fig. 4: den prinzipiellen Aufbau einer zweiten Ausführungsform eines erfindungsgemäßen Einspritzelementes in einer perspektivischen Schnittdarstellung, wobei ein offener Ventilsitz dargestellt ist,
- Fig. 5: den prinzipiellen Aufbau der zweiten Ausführungsform des erfindungsgemäßen Einspritzelementes in einer perspektivischen Schnittdarstellung, wobei ein geschlossener Ventilsitz dargestellt ist,
- Fig. 6: eine perspektivische Darstellung des erfindungsgemäßen Einspritzelements gemäß der zweiten Ausführungsvariante mit aktivierter und mit nichtaktivierter Einspritzung, und
- Fig. 7: eine perspektivische, geschnittene Darstellung des Einspritzelementes der zweiten Ausführungsvariante.

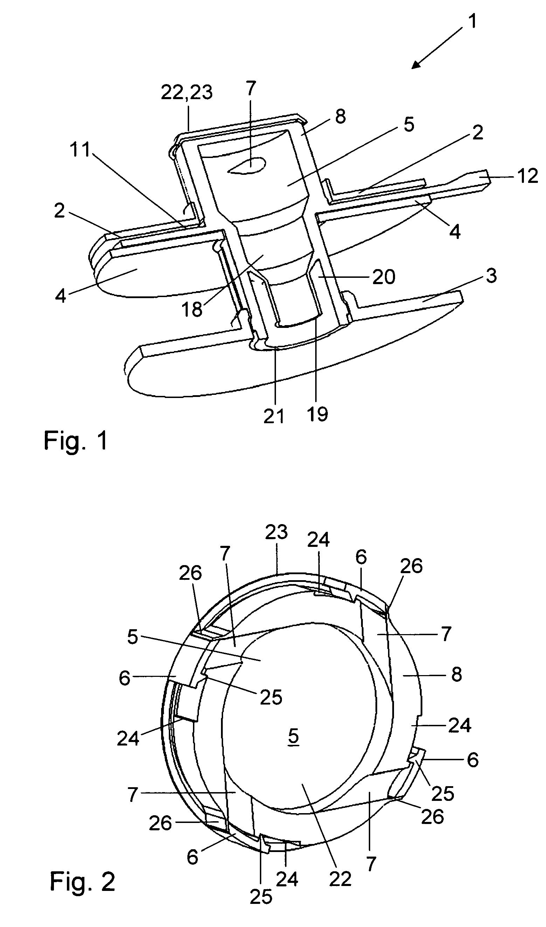

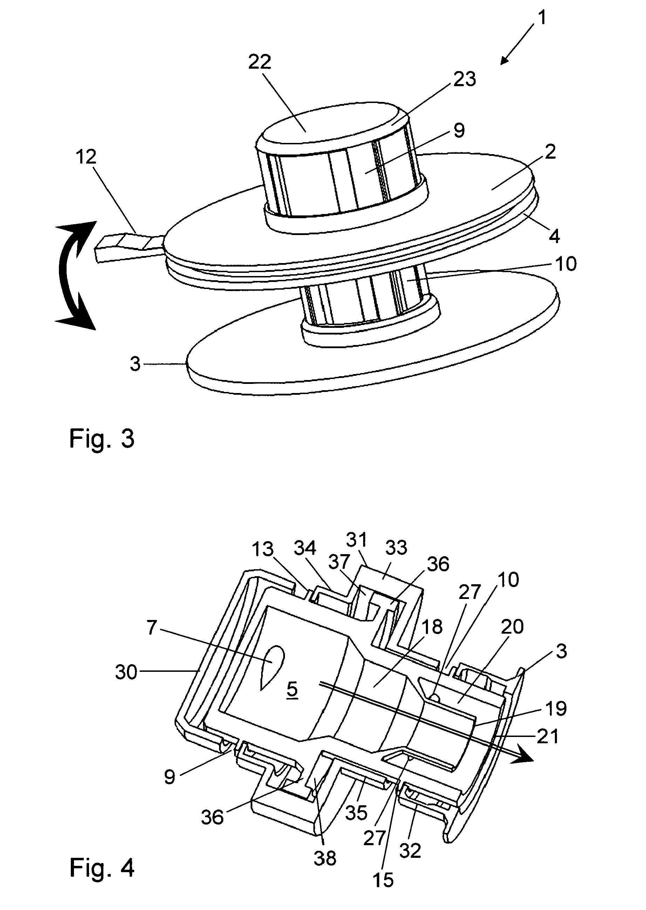

Fig. 1 zeigt in einer perspektivischen Schnittansicht den prinzipiellen Aufbau eines erfindungsgemäßen Einspritzelements 1 gemäß einer ersten Ausführungsvariante, bei der die in das Einspritzelement integrierte Ventilfunktion durch eine Rotationsbewegung eines Zentralkörpers 8 des Einspritzelements 1 gegenüber einem in Fig. 2 und 3 besser erkennbaren Verschlusselement 23 gebildet ist. Der Zentralkörper 8 weist einen ersten Elementraum 5 auf, der umfangsseitig mit tangential verlaufenden Bohrungen 7 versehen ist. Die Anzahl an tangential verlaufenden Bohrungen 7 bildet eine Einlassöffnung des Elementraums 5 aus. Der Elementraum 5 mündet stromabwärts in einen sich verengenden ersten Strömungskanal 18, der im Bereich einer Heißgasplatte 3 der Raketenbrennkammer eine erste Austrittsöffnung 19 aufweist. Koaxial zu dem Strömungskanal 18 ist ein zweiter Elementraum 20 für eine zweite Treibstoffkomponente vorgesehen. Der zweite Elementraum 20 weist im Bereich der Heißgasplatte 3 eine zweite, zu der ersten Auslassöffnung koaxiale Auslassöffnung 21 auf. Die genauen Ausgestaltungen der Auslassöffnungen 19, 21 sowie deren relative Anordnung zueinander sind für die vorliegende Erfindung von untergeordneter Bedeutung, so dass an dieser Stelle nicht näher darauf eingegangen wird. Umfangsseitig des Elementraums 20 ist ebenfalls eine Einlassöffnung, umfassend eine Anzahl an bevorzugt radialen Bohrungen 27 (in Fig. 1 nicht ersichtlich) zur Einbringung der zweiten Treibstoffkomponente in den zweiten Elementraum 20 ausgebildet. Der Zentralkörper 8 ist an seinem den Auslässen 19, 21 gegenüberliegendem Ende mit einem Deckel 22 verschlossen.

Der Zentralkörper 8 ist drehbar in einer Ventilaufnahme gelagert, welche durch die Heißgasplatte 3 (Face Plate), sowie einen unteren und einen oberen Zwischenboden 2, 4 ausgebildet ist. An dem Zentralkörper 8 ist flanschartig eine Scheibe 11 ausgebildet, welche zwischen dem unteren und dem oberen Zwischenboden 2, 4 drehbar angeordnet ist. An der Scheibe 11 ist ein Hebel 12 vorgesehen, auf welchen ein in der Figur nicht näher dargestelltes Antriebsmittel zur Herbeiführung einer Drehbewegung des Zentralkörpers 8 einwirken kann. Durch Betätigung des Hebels 12, z.B. durch ein mechanisches oder pneumatisches Antriebsmittel, wird die Drehbewegung des Zentralkörpers 8 und damit eine rotatorische Verschiebung der Bohrungen 7 der ersten Einlassöffnung relativ zu dem Verschlusselement 23 herbeigeführt, welche zu einer Veränderung der in den Elementraum 5 eingeführten Treibstoffmenge führt. Die zwischen der Scheibe 11 und dem unteren bzw. oberen Zwischenboden 2 bzw. 4 gebildeten Zwischenräume können mit zusätzlichen Drainage und Dichtelementen versehen sein, um einen Kontakt zwischen Treibstoffkomponenten zu vermeiden.

Dies wird besser anhand der Figuren 2 und 3 deutlich, welche die Ausgestaltung des Verschlusselements 23 in Relation zu den Bohrungen 7 sowie den in Fig. 1 nicht ersichtlichen Bohrungen 27 im Bereich des zweiten Elementraums 20 verdeutlichen. Fig. 2 zeigt dabei das verwendete Prinzip für die Bohrungen 7, das analog auch für die Bohrungen 27 gilt.

Das Verschlusselement 23 ist außenumfangsseitig am Zentralkörper 8 angeordnet und umfasst eine der Anzahl der Bohrungen 7 entsprechende Anzahl an Verschlusskappen 6. Im Ausführungsbeispiel der Fig. 2 weist der Zentralkörper 8 beispielhaft vier tangentiale Bohrungen 7 auf, denen jeweils eine Verschlusskappe 6 zugeordnet ist. Die Verschlusskappen 6 für die Bohrungen 7 sind an dem Deckel 22 des Verschlusselements 23 befestigt. In der in Fig. 2 gezeigten Stellung bedecken die Verschlusskappen 6 den Einlassquerschnitt der Bohrungen 7 vollständig, so dass keine Treibstoffkomponente in den Elementraum 5 eingebracht werden kann. Durch eine rotatorische Bewegung des Zentralkörpers 8 im Uhrzeigersinn wird zunächst ein Teil des Querschnitts der Bohrungen 7 offengelegt, bis schließlich der gesamte Querschnitt der Bohrungen 7 zum Einströmen der Treibstoffkomponente in den Elementraum 5 zur Verfügung steht. Die Endstellung des Zentralkörpers 8 ist erreicht, wenn an den Verschlussseiten 6 angeordnete Nasen 25, die dem Zentralkörper 8 zugewandt sind und in einer jeweiligen Führungsnut 24 geführt sind, an einen jeweiligen Endabschnitt der Führungsnuten 24 anschlagen. In der in Fig. 2 gezeigten Verschlussstellung grenzen die Verschlusskappen 6 gleichzeitig an jeweilige Anlagestege 26 des Zentralkörpers 8 an, wobei diese derart gewinkelt sind, dass sie jeweils an einem rampenförmigen Abschnitt der Verschlusskappen 6 innig anliegen. Die Verschlusskappen 6 sind mit nicht näher dargestellten Dichtmitteln versehen, so dass kein Treibstoff über die Bohrungen 7 in den Elementraum 5 gelangen kann.

Fig. 3 zeigt das gesamte Einspritzelement 1 in einer perspektivischen Darstellung. Dabei wird zum einen die rotationssymmetrische Gestalt erkennbar. Ferner ist ersichtlich, dass zwischen den Verschlusskappen 6 Öffnungsfenster 9 (im Bereich der Bohrungen 7 des ersten Elementraums 5) und 10 (im Bereich der Bohrungen 27 des zweiten Elementraums 20) vorgesehen sind, über welche eine jeweilige Treibstoffkomponente in den Elementraum 5 bzw. 20 gelangen kann, wenn die Bohrungen 7 bzw. die Bohrungen des zweiten Elementraums 20 im Bereich der Öffnungsfenster 9 bzw. 10 gelegen sind. Der notwendige Drehwinkel zum Bereitstellen oder Verschließen der Öffnungsfenster und zur Zufuhr einer gewünschten Treibstoffmenge, welcher - wie bereits erläutert - über einen Akutator über die Betätigung des Hebels 12 bewirkt wird, wird durch die Anzahl und die Größe der Bohrungen in dem Zentralkörper 8 in dem Bereich des ersten bzw. zweiten Elementraums 5, 20 bestimmt.

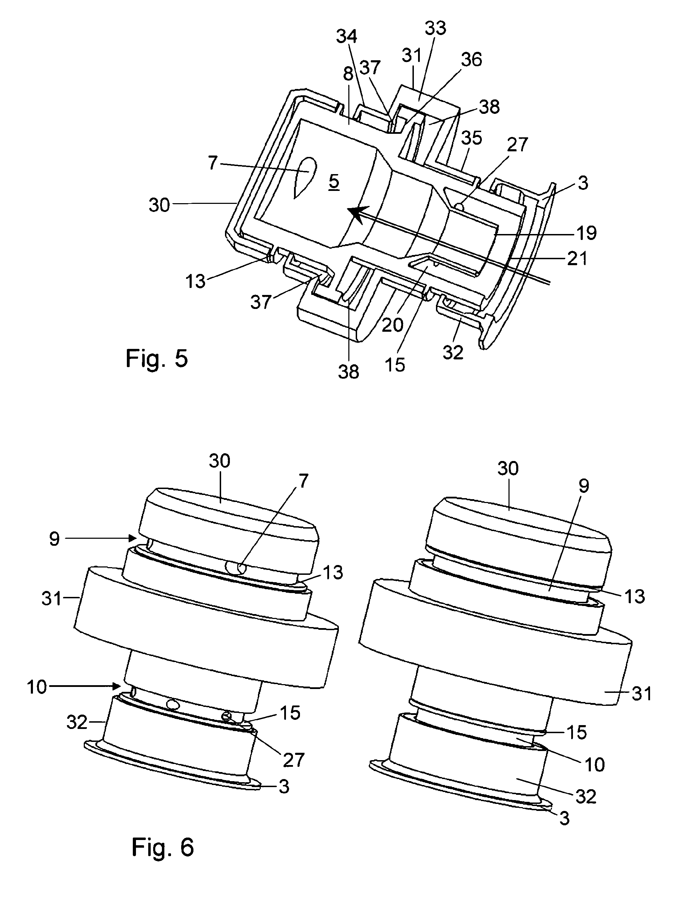

In den Figuren 4 bis 7 ist ein alternativer Lösungsansatz zur Integration der Ventilfunktion in das Einspritzelement dargestellt. Hierbei erfolgt das Öffnen und Verschließen der Querschnitte der Bohrungen 7 bzw. 27 im Bereich des ersten bzw. zweiten Elementraums 5, 20 durch eine axiale Verschiebung des Zentralkörpers 8 relativ zu dem Verschlusselement 23. In den Fig. 4 und 5 ist jeweils in einer perspektivischen Schnittansicht ein Einspritzelement 1 dargestellt, wobei Fig. 4 die Situation bei offenem Ventilsitz (d.h. aktiviertem Einspritzelement 1) und Fig. 5 die Situation bei einem geschlossenen Ventilsitz (d.h. deaktiviertem Einspritzelement 1) darstellt.

Das Verschlusselement 23 besteht im Wesentlichen aus drei Teilen, die mechanisch miteinander verbunden sind. Ein erstes Teil 30 weist eine topfförmige Gestalt auf und ist über den von der Raketenbrennkammer abgewandten Abschnitt des Zentralkörpers 8 gestülpt. Die Wandung des ersten Teils 30 liegt außen an dem Zentralkörper 8 an und ist derart bemessen, dass in der in Fig. 4 gezeigten Öffnungsstellung die Bohrungen 7 nicht durch die Wandung verdeckt sind. Im Gegensatz dazu verdeckt die Wandung des ersten Teils 30 die Bohrungen 7, wenn die Wandung mit ihrem Rand an einer ersten Dichtungs-Begrenzungsvorrichtung 13 anliegt.

Ein zweites Teil 31 des Verschlusselements 23 weist einen im Querschnitt U-förmigen Abschnitt 33 auf, der einen umlaufenden Flansch 36 des Zentralkörpers 8 in radialer und in axialer Richtung umschließt. Entsprechend der äußeren Gestalt des Zentralkörpers 8 sind die parallel verlaufenden Schenkel des "U" unterschiedlich lang ausgebildet. An ihren Enden gehen die parallel verlaufenden Schenkel in parallel zur Wandung des Zentralkörpers 8 verlaufende Wandungsabschnitte 34 bzw. 35 über. Während der Wandungsabschnitt 35 außen an dem Zentralkörper 8 anliegt, verläuft der Wandungsabschnitt 34 beabstandet dazu und ist über einen nach innen gerichteten Flansch mit dem Zentralkörper 8 in mechanischem Kontakt.

Der umlaufende Flansch 36 des Zentralkörpers 8 weist im Querschnitt die Gestalt eines "T" auf, wobei der Flansch 36 derart an dem Boden des U-förmigen Abschnitts 33 anliegt, dass die durch den Flansch gebildeten Kammern 37, 38 hermetisch voneinander getrennt sind. Durch die Druckbeaufschlagung der Kammer 37, z.B. mittels eines Gases oder einer Feder, erfolgt die axiale Verschiebung des Zentralkörpers 8, bis der nach innen gerichtete Flansch des Wandungsabschnitts 34 an die erste Dichtungs-Begrenzungsvorrichtung 13 gedrückt ist. Hierdurch ist ein Abstand zwischen dem Ende des Wandungsabschnitts 35 und einer zweiten, umlaufenden Dichtungs-Begrenzungsvorrichtung 15 gebildet, so dass durch das hierdurch gebildete Öffnungsfenster 10 Treibstoff über die Bohrungen 27 ins Innere des zweiten Elementraums 20 gelangen kann. Bei Überführung in den geschlossenen Ventilzustand gemäß Fig. 5 erfolgt die Druck- oder Federkraftbeaufschlagung über die Kammer 38, wobei der Flansch 36 der Entkopplung beider Treibstoffe dient. In dem zweiten Teil 31 können zur Vermeidung eines Kontakts zwischen den Treibstoffkomponenten Drainage- und Dichtelemente vorgesehen sein. Zusätzlich können Drainagebohrungen in dem zweiten Teil vorgesehen sein, welche in Kombination mit den Dichtelementen einen Kontakt der Treibstoffe zueinander vermeiden.

Das Verschlusselement 23 umfasst ferner ein drittes Teil 32, welches mit der Heißgasplatte 3 einstückig ausgebildet ist. Das dritte Teil 32 dient der Begrenzung des axialen Verschiebewegs des Zentralkörpers 8, wie am besten aus Fig. 4 ersichtlich ist.

In Fig. 5 ist dabei ersichtlich, dass bei geschlossenem Ventilsitz das Ende des Wandabschnitts 35 an die zweite Dichtungs-Begrenzungsvorrichtung 15 angrenzt. Ebenso grenzt die Wandung des topfförmigen ersten Teils 30 an die erste Dichtungs-Begrenzungsvorrichtung 13 an. Das von der Heißgasplatte 3 abgewandte Ende des dritten Teils 32 ist dabei von der Dichtungs-Begrenzungsvorrichtung 15 beabstandet. Bei offenem Ventilsitz (vgl. Fig. 4) grenzen das von der Heißgasplatte 3 abgewandte Ende des dritten Teils 32 an die Begrenzungsvorrichtung 15 und der Wandabschnitt 34 des zweiten Teils 31 an die Begrenzungsvorrichtung 13 an. Zweckmäßigerweise ist der Zentralkörper 8 axial beweglich in den ortsfesten Teilen 30, 31, 32 gelagert.

Fig. 6 zeigt den Betriebs- als auch den Abschaltzustand des als Koaxialelement ausgebildeten Einspritzelements. Während des Betriebs (offener Ventilsitz, vgl. linke Figur) sind die Bohrungen 7 sowie 27 im Bereich der Öffnungsfenster 9, 10 freigegeben. Durch eine axiale Verschiebung des Zentralkörpers 8 werden die Bohrungen 7, 27 aus den Öffnungsfenstern 9 und 10 herausbewegt, bis der Treibstoffzufluss unterbrochen ist (geschlossener Ventilsitz, vgl. rechte Figur). Aus Fig. 6 geht weiterhin gut der dreiteilige Aufbau des Verschlusselements 23 hervor, wobei das erste, zweite und dritte Teil 30, 31, 32 miteinander verbunden oder zumindest statisch zueinander sind.

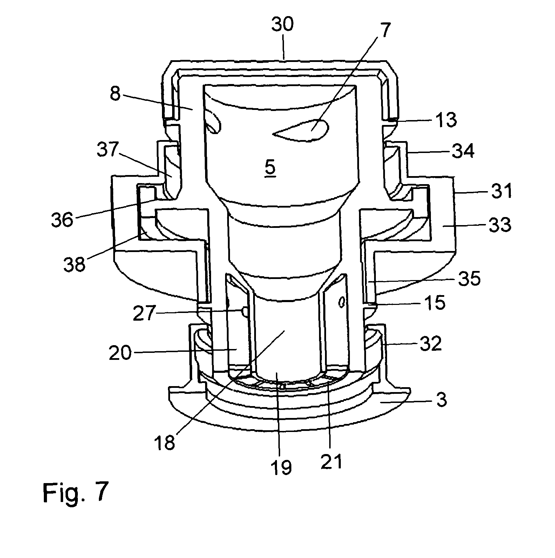

Fig. 7 zeigt in einer perspektivischen Schnittdarstellung nochmals ein Anwendungsbeispiel, in dem das Einspritzelement als koaxiales Einspritzelement mit nur zentralem Drall ausgebildet ist. Demgegenüber weist die zweite Auslassöffnung 21 ein Mittel zur Aufteilung des Treibstoffs in eine Anzahl an Treibstoffstrahlen auf. Der übrige Aufbau entspricht dem in Fig. 5 gezeigten.

Durch die direkte Integration des Dichtsitzes in das Einspritzelement wird eine verlängerte Reaktionszeit aufgrund der Füllung eines Trippelvolumens vermieden, das ein erfindungsgemäßes Einspritzelement nicht aufweist. Dabei kann die Erfindung sowohl auf Doppeldrall als auch auf herkömmliche Koaxialelemente angewendet werden. Ferner weist die Erfindung den Vorteil auf, dass die Einspritzelemente robust und kompakt aufgebaut werden können.

### Bezugszeichenliste

- 1: Einspritzelement
- 2: oberer Zwischenboden
- 3: Heißgasplatte (Face plate)
- 4: unterer Zwischenboden
- 5: erster Elementraum
- 6: Verschlusskappen
- 7: Bohrung
- 8: Zentralkörper
- 9: Öffnungsfenster
- 10: Öffnungsfenster
- 11: Scheibe
- 12: Hebel
- 13: Dichtungs-Begrenzungsvorrichtung
- 14: Dichtungseinheit
- 15: Dichtungs-Begrenzungsvorrichtung
- 18: Strömungskanal
- 19: erster Austritt
- 20: zweiter Elementraum
- 21: zweiter Austritt
- 22: Deckel des Verschlusselements
- 23: Verschlusselement
- 24: Führungsnut im Zentralkörper
- 25: Nase der Verschlusskappe
- 26: Anlagesteg des Zentralkörpers für die Verschlusskappe
- 27: Bohrung
- 30: erstes Teil des Verschlusselements 23
- 31: zweites Teil des Verschlusselements 23
- 32: drittes Teil des Verschlusselements 23
- 33: U-förmiger Abschnitt

- 34: Wandabschnitt
- 35: Wandabschnitt
- 36: Flansch
- 37: Kammer
- 38: Kammer

## Patentansprüche

1. Einspritzelement für eine Raketenbrennkammer, das einen zumindest weitgehend rotationssymmetrisch ausgebildeten Zentralkörper (8) mit zumindest einem Elementraum (5, 20) zur Einbringung einer jeweiligen Treibstoffkomponente in die Raketenbrennkammer aufweist, wobei der zumindest eine Elementraum (5, 20) über ein jeweiliges Ventil mit einer Treibstoffzufuhr verbunden ist,
**dadurch gekennzeichnet, dass**
das Ventil durch ein koaxial zu dem Zentralkörper (8) angeordnetes Verschlusselement (23) gebildet ist, das gegenüber Einlassöffnungen (7, 27) des zumindest einen Elementraums (5, 20) axial und/oder rotatorisch bezüglich der Rotationsachse des Einspritzelements (1) zwischen einer Verschlussstellung und einer Öffnungsstellung bewegbar ist, oder umgekehrt.

2. Einspritzelement nach Anspruch 1, **dadurch gekennzeichnet, dass** das Verschlusselement (23) auf einer Außenseite des Zentralkörpers (8) angeordnet ist.

3. Einspritzelement nach Anspruch 1 oder 2, **dadurch gekennzeichnet, dass** das Verschlusselement (23) fest an einem Zwischenboden (2, 4) befestigt ist, wobei der Zentralkörper (8) relativ zu dem Verschlusselement (23) in einer Aufnahme des Zwischenbodens (2, 4) drehbar gelagert ist.

4. Einspritzelement nach Anspruch 3, **dadurch gekennzeichnet, dass** ein Drehwinkel des Zentralkörpers (8) relativ zu dem Verschlusselement (23) zur Aktivierung der Einspritzung in Abhängigkeit des wirksamen Strömungsquerschnitts der Einlassöffnungen (7, 27), insbesondere der Gestalt und/oder der Anzahl von Öffnungen, gewählt wird.

5. Einspritzelement nach Anspruch 3 oder 4, **dadurch gekennzeichnet, dass** dieses ein mechanisches oder pneumatisches Antriebsmittel zur Herbeiführung einer Drehbewegung des Zentralkörpers (8) relativ zu dem Verschlusselement (23) umfasst.

6. Einspritzelement nach einem der Ansprüche 3 bis 5, **dadurch gekennzeichnet, dass** das Verschlusselement (23) eine der Anzahl der Öffnungen (7, 27) entsprechende Anzahl an Verschlusskappen (6) umfasst, wobei in der Verschlussstellung die Verschlusskappen die Öffnungen (7, 27) verschließen und in der Öffnungsstellung die Öffnungen freigeben.

7. Einspritzelement nach Anspruch 6, **dadurch gekennzeichnet, dass** die Verschlusskappen (6) mit einem Dichtungsmittel versehen sind.

8. Einspritzelement nach Anspruch 1 oder 2, **dadurch gekennzeichnet, dass** die axiale Verschiebung des Zentralkörpers (8) relativ zu dem Verschlusselement (23) zur Freigabe der Öffnungen oder zum Verschließen der Öffnungen durch Druckbeaufschlagung mit Gas oder einem Federmechanismus oder einem mechanischen Antriebsmittel erfolgt.

9. Einspritzelement nach Anspruch 8, **dadurch gekennzeichnet, dass** das Verschlusselement (23) eine erstes Teil (30) umfasst, welches topfförmig ausgebildet und über den von der Raketenbrennkammer abgewandten Zentralkörper (8) gestülpt ist zum Öffnen oder Verschließen von Öffnungen des zumindest einen Elementraums (5, 20).

10. Einspritzelement nach Anspruch 8 oder 9, **dadurch gekennzeichnet, dass** an dem Zentralkörper (8) ein umlaufender Flansch (36) vorgesehen ist, der von einem im Querschnitt U-förmigen Abschnitt (33) eines zweiten Teils (31) des Verschlusselements (23) in radialer und in axialer Richtung umschlossen ist, wobei der umlaufende Flansch (36) an den Boden des U-förmigen Abschnitts (33) grenzt und diesen in zwei hermetisch voneinander getrennte Kammern (37, 38) trennt, wobei durch Steuerung der Volumina der Kammern (37, 38) die Stellung des Zentralkörpers (8) relativ zu dem Verschlusselement (23) steuerbar ist.

11. Einspritzelement nach Anspruch 10, **dadurch gekennzeichnet, dass** der Zentralkörper (8) eine obere und eine untere, jeweils umlaufende Begrenzungsvorrichtung aufweist, an welche ein jeweiliger zu dem Zentralkörper (8) koaxialer Wandabschnitt (34, 35) des Verschlusselements (23) in seiner Öffnungs- bzw. Verschlussstellung grenzt, wobei die jeweiligen Wandabschnitte (34, 35) sich integral flanschartig von dem U-förmigen Abschnitt (33) des Verschlusselements (23) weg erstrecken.

12. Einspritzelement nach einem der Ansprüche 10 oder 11, jeweils in Verbindung mit Anspruch 9, **dadurch gekennzeichnet, dass** das erste und das zweite Teil (30, 31) mechanisch miteinander gekoppelt sind.

13. Einspritzelement nach einem der vorherigen Ansprüche, **dadurch gekennzeichnet, dass** diese in Koaxialbauweise ausgebildet ist, bei dem ein erster Elementraum (5) für eine erste Treibstoffkomponente in einen sich verengenden ersten Strömungskanal (18) mit einer ersten Auslassöffnung (19) mündet und ein zweiter Elementraum (20) koaxial zu dem ersten Strömungskanal (18) angeordnet ist und eine zweite, zu der ersten Auslassöffnung (19) koaxiale Auslassöffnung (21) aufweist.

14. Einspritzelement nach Anspruch 13, **dadurch gekennzeichnet, dass** die Einlassöffnungen (7, 27) des ersten Elementraums (5) und/oder zweiten Elementraums (20) als radiale oder tangentiale Bohrungen ausgebildet sind.

15. Einspritzsystem für eine Raketenbrennkammer, **dadurch gekennzeichnet, dass** diese zumindest ein Einspritzelement (1) nach einem der vorherigen Ansprüche aufweist.
